# EUROPEAN PATENT APPLICATION

(11) **EP 1 872 991 A1**
(43) Date of publication of application: **02.01.2008**
(21) Application number: 06008274.0
(22) Date of filing: 21.04.2006
(51) Int. Cl.: B60J 7/08

(54) **Covering system for transportable containers**

(71) Applicant: OFFICINA AM.BO. DI BORON AMERIGO, 37032 Monteforte d'Alpone VR (IT)
(72) Inventor: Amerigo, Boron, 37032 Monteforte d'Alpone (Verona) (IT)

(57) **Abstract**

The invention concerns a mechanical structure formed by a set of mechanical parts which hold a cloth (7) aimed at covering open containers (3) during transport. The mechanical parts are designed so that they can wind-up the cloth when it is not in use or when it must be extended and retracted over the container (3). The covering device can be placed in a wide range of heights by the lifting feature of the mechanical device, formed by many parts sliding one over the other. This allows to adapt the covering system to containers with different sizes.

## Description

Building companies and waste disposal industries often use frames mounted on trucks in order to transport containers to move loose materials. For example open containers could be used in storing debris in construction sites. Open containers are often provided with oilcloth to cover the carried load in order to protect it and to avoid it accidentally drops off the container itself. Moreover, open containers are usually formed by separable units that can be fixed to the frame structure, during the transport, and then afterwards removed in the assigned place. Such containers are typically used on frames provided with unloading devices and they are usually mounted on these frames during transport, only. Containers have usually a rectangular box shape with varying capacity from 10 to 50 cube meters. Their dimensions widely vary in width and length with side walls 4-8 feet high and 10-35 feet long. The majority of the containers currently in use are 4', 6' or 8' high and from 17 to 24 feet long. Some containers have the rear wall higher than the remaining part.

To avoid the material dropping off during transport (such as when carrying debris and waste), it is often required to cover the containers. Currently, covering systems usually employ tarpaulins on containers. The tarpaulin is often wound up on a roll, part of the covering system, if not in use. Various sort of covering systems have been designed during the past years in order to wind and unwind the tarpaulin. Some of them are manually activated, some others are provided with an hydraulic, pneumatic or electrical system to automate the covering operation. Covering system are usually mounted on trucks in order to be applied easily on containers placed on the truck frame. The tarpaulin must be fixed along the entire container perimeter to assure it holds the material inside of it. The tarpaulin is fastened by an operator that often has to climb on the container in order to wrap its sides by hand along the container walls. Therefore, due to the truck size and to the container' height, the operator has to work in unsafe positions and high on the ground. Not only this increases accident risks for the operator, but it also yield to a bad tarpaulin positioning.

Covering devices have to be positioned over the container height in order to easily unwind the tarpaulin, and, at the same time, they must be tightened at the container front side during transport to prevent material drop off. As a result, in the past covering devices have been fixed to mounting stands positioned higher than the container top. As this solution can be suitable for certain loads, sometimes stacked material exceeding the container top is hard to cover. In particular a covering system at fixed height is not feasible for vehicles carrying containers with walls characterised by different dimension. To adjust to containers with different height, covering systems are often mounted on special rising structures that, although they enable the repositioning of the covering system, they require additional expenses and complexity to the vehicle. In particular, the extensible cylinders have reduced mechanical dimensions that are not suitable to the whole range of container heights.

The present invention concerns a covering system for open containers, characterised by improved control and manoeuvrability and suited to containers with different heights, without all limitations affecting actual similar systems (such as maintenance intervention, etc...). This invention is high efficient as it requires only one structure for every carrying vehicle instead one for every container. The container covering can be made easier if it is actuated at ground level, also in order to reduce the risk of accidents: a tarpaulin is extended and retracted by means of a winding/unwinding device. The container covering and uncovering operations have to be assisted manually by an operator whose task is to hold the tarpaulin tight by using a proper rope attached to the tarpaulin end, and finally fastening it to other cables positioned at the container sides. These covering and uncovering operations permit to adapt the system to containers with different sizes and with d-ifferent loads. In the invention, described hereafter, the rising system is formed by a set of two-part sliding uprights whose first, is actuated by oleodynamic cylinders and the second one chain-driven directly from the first movement. The mentioned characteristics are then described in detail together with their preferred realizations.

In order to better understand the invention, it is appropriate to follow its description on the figures, included as examples without limiting the invention features and possible realizations:
1. Figure 1 - a schematic side view of the container covering system, according to an installation on a frame.
2. Figure 2 - a global photographic view of the container covering system.
3. Figure 3 - a view of the tarpaulin winding/unwinding device.
4. Figure 4 - a view of the system rising device in upright position.
5. Figure 5 - a schematic side view of an alternative realisation for the container covering system during unwinding operation.
6. Figure 6 - a schematic side view of an alternative realisation.for the container covering system in final position'.

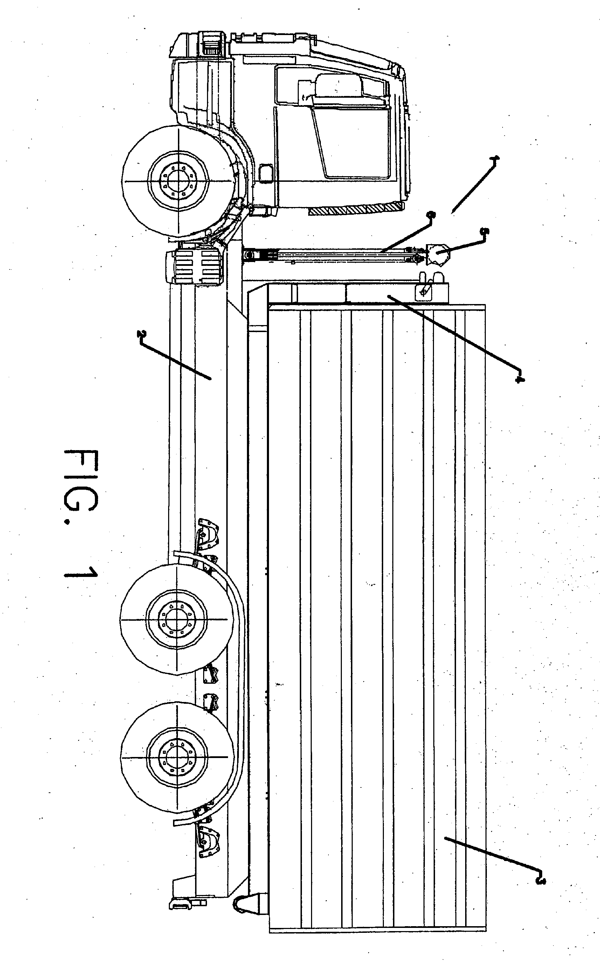

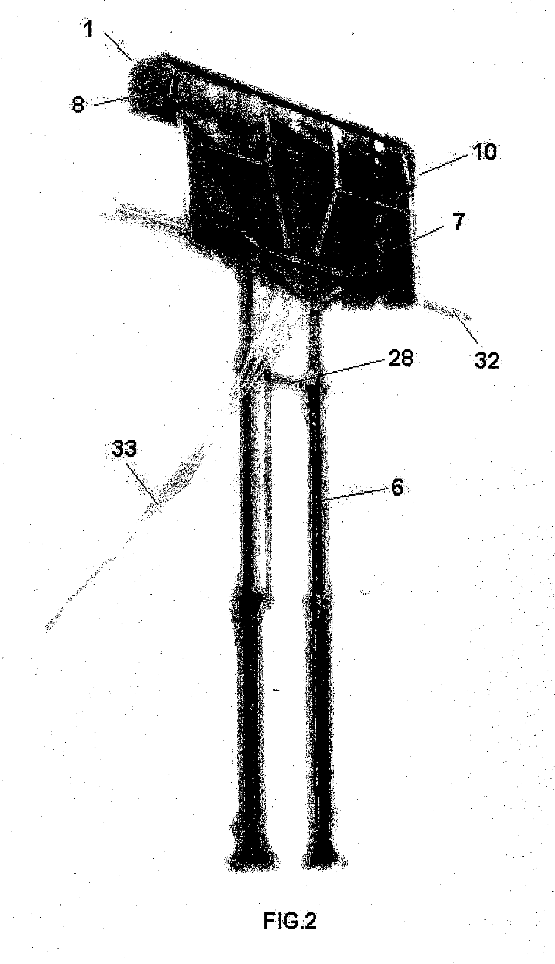

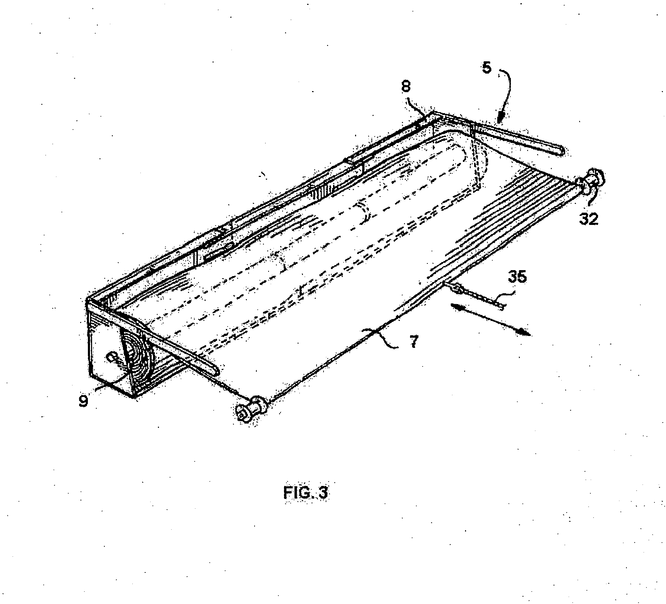

In the preferential realization for this invention, a container covering device 1 is mounted onto a frame 2, adapted to support and transport an open container 3 (fig. 1). The container 3 is usually supported onto an unloading structure 4 so that it can be picked up and taken down on/from the frame, being interchangeable and usable on other vehicles and frames. The presented invention can be used either on frames with unloading structures or in fxed frames, even with permanent mounted containers. With reference to figures 2 and 3, the container covering system 1 includes a winding device 5 that retains a sheet of flexible material employed in the covering of the container 3. This sheet of material is referred to as "cloth" and it indicates whatever sheet made by known flexible material that can be used to cover the containers. The unwinding device is preferably mounted on an upright 6 that vertically slides in order to control the position of the cloth 7, above or under the higher end of the container. Alternative, it can be mounted on a fixed upright or on a bracket.

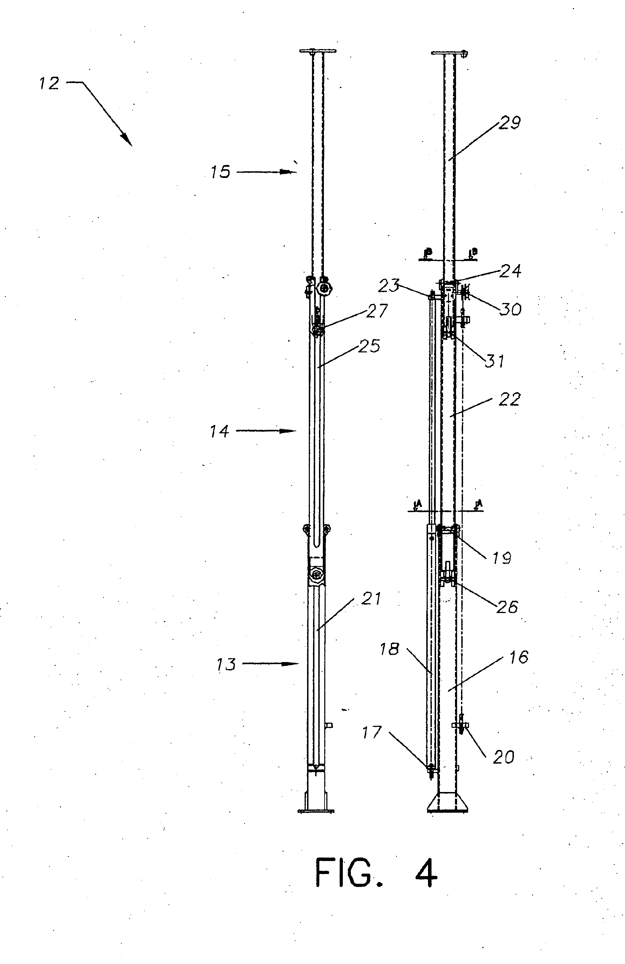

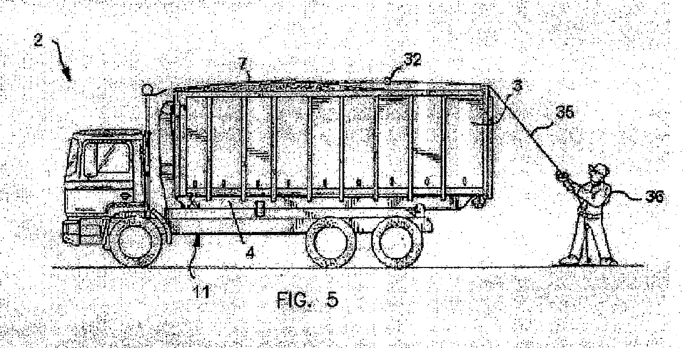

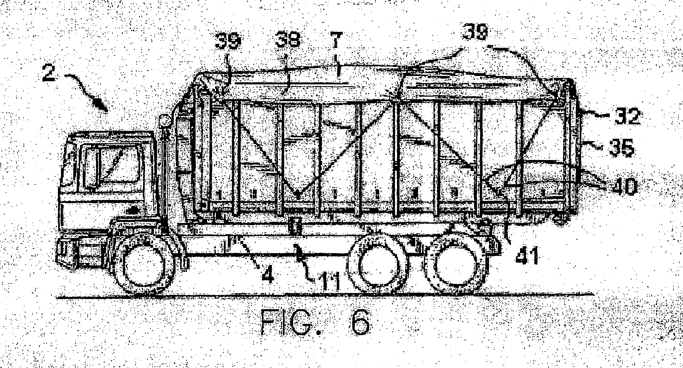

The upper part of the upright 6 preferably mounts a positioning place 8 for the winding device 5. The cloth 7 is wound around a roll 9 and it is mounted in a way it can rotate in its positioning place 8. A motor 10, mounted in the positioning place 8, is coupled to the roll 9 by means of a clutch so that the cloth smoothly and evenly unwind to the extended position, covering the container 3. Moreover, the motor 10 winds up the cloth on the roll to a withdrawn position as far as the cloth is contained inside the positioning place 8. In a preferred realisation, the motor 10 can be hydraulically actuated by a driving unit or by a pump fed directly by the mechanical power coupling on the vehicle frame. Nevertheless other actuators, such as a turning handle, can be used. The positioning place 8 can be made of different materials such as steel, aluminium, or even plastic. A cloth guiding element is fixed to the positioning place in order to guarantee the cloth is unwind at the same correct angle. The roll 9 can be even spring-loaded in order to automatically retract the cloth 7 when it is not fastened to the container. One end of the cloth 7 is fixed to the roll 9 while the other end is tied to a rod 32; the rod 32 keeps tightened the free end of the cloth 7 either when' the cloth is extended to cover the container 3 or when the cloth is wound on the roll 9. A rope 35 is preferably attached to the rod 32 to manually unwind the cloth and to regulate retraction. In the preferred realisation, the covering device 5 is bolted to the rising structure 12 in a way it can be regulated and secured properly. As shown in figure 1, the upright 6 is preferably mounted on the front side of the frame, behind the driving cabin. The upright 6 can be fixed to the structure 4, to the frame 11 or to a different part of the vehicle. In a preferred realisation, shown in figure 4, the upright 6 includes a rising device 12 formed by three telescopic units (13, 14 and 15) that vertically lift the positioning place 8 over the container 3, or they lower the positioning place 8 under the container top. Different realisations, with or without telescopic parts, can be profitably used to raise the positioning place 8, which can be alternatively fastened at a fixed height. With reference to figure 4, the covering system 1 includes a first upright formed by a pair of square section tubes 16. A welded check pin 17 hinges one end of the lifting hydraulic cylinder 18. A mechanical system guiding the higher sliding part 19 is welded to the extremity of the tube: it is formed by a series of small rollers or sliding blocks. Moreover, a part 20 is welded on the tube to act as blocking device for the chain drive rising the third sliding part. That part is moving into the slot 21 allowing the motion of the chain drive moving end, attached to the inner tube. With reference to figures 4, the covering system 1 includes a second upright formed by a pair, of square section tubes 22. This upright fits directly on the tubes of the upright 16. and it includes a welded check pin 23 hinging the second end of the lifting hydraulic cylinder 18. A mechanical system guiding the following sliding part 24 is welded to the extremity of the tube:'it is formed by a series of small rollers or sliding blocks. The slot 25 allows the motion of the lifting pin connected to the third sliding part. A guiding system 26 is welded to the lower extremity of the tube: it is formed by a series of small rollers or sliding blocks and it allows to recover the play and, together with sliding part 19, it permits a reliable and safe movement. The gear-wheel 27 is fixed to element 26 and it transmits the motion from the cylinder to the inner tube, and therefore to the third sliding part. The horizontal bar 28 guarantees the stability and the stiffness of the uprights. With reference to figures 4, the covering system 1 includes a third upright formed by a pair of square section tubes 29. This upright fits directly on the tubes of the upright 22, and it includes a welded check pin 30 holding the chain allowing the tube motion (third sliding part). A mechanical guide 31 is welded to the extremity of .the tube: it is formed by a series of small rollers or sliding blocks and it allows to recover the play and, together with sliding part 26, it permits a reliable and safe movement. The stand for the cloth winding device is fixed to the upper end of the tube. The covering device 5 can be placed in a wide range of heights by the rising device 12, in order to adapt to containers with different wall sides. A pulling rope 35, tied to rod 32, is used to manually unwind the cloth 7 from roll 9, as shown in figure 5. The container 3 is then covered with cloth 7 by an operator pulling the rope 35. towards the back of the container 3. Preferably the rope 35 is attached to rod 32 by a clip, so that it can be easily connected and disconnected. The rope must also be long enough to allow the operator 36 to manage the whole covering action at ground level. Operating the covering at ground level introduces less drawbacks because the operator is in safe position. After the cloth 7 is unrolled on the container 3, the rope 35 is securely fastened (for example tying it to a bar, to a hook, etc...) on the container rear wall 37 so that the cloth cannot move from its final fixed position (figure 6). The rope 35 can also be fixed directly to the rear wall 37 by any useful joint. The cloth sides include flaps 38 and grommets 39 (or any other part) to be used to strengthen cables 40 in order to fasten the cloth 7 to the container sides. The container 3 includes hooks 41, bars or other structures on the container sides to make secure cables 40. If container 3 is at ground level, the operator is not required to climb on the vehicle to strengthen cables 40 and to fasten flaps 38 to the container sides. The system 1 therefore makes the covering action easier and less risky for the operator. After the transport, cables 40 are disconnected to release flaps 38 from the cloth 7. Flaps 38 automatically retract due to cables 40, as they move to the external part of cloth 7 when cables 40 are loosen. Therefore the container 3 can be uncovered when it is on the vehicle 43, by untying the rope 35 and allowing the motor connected to roll 9 to wind-up the cloth. Usually the operator supports the rolling-up by using cable 35 to regulate an even movement on roll 9. The rope 35 is detached from rod 32 after the cloth 7 is fully wound around roll 9. The material stowed in the container can also be unloaded before the cloth is withdrawn. Therefore the container 3 could be taken down from the vehicle before the container is uncovered: the cloth winding up process remains' unchanged.

## Claims

1. Covering system for an open container on a vehicle frame, including a winding/unwinding device carrying a cloth which can extend from an open position that covers the container, to a retracted position in which the cloth is completely wound up.

2. Covering system according to claim 1, **characterised in that** it includes a rising device that can lift the cloth winding/unwinding device in a position above the container, and it can also lower the ' cloth winding/unwinding device in another position below the top of the container.

3. Covering system according to claim 2, **characterised in that** it is formed by a series of uprights with two sliding parts, the first one driven by an oleodynamic cylinder and the second one chain-driven directly from the movement of the first sliding part.
